# EUROPEAN PATENT SPECIFICATION

(11) **EP 4 137 297 B1**
(45) Date of publication and mention of the grant of the patent: **11.11.2026**
(21) Application number: 21787585.5
(22) Date of filing: 14.04.2021
(51) Int. Cl.: B29C 70/30, B29C 70/54, B29C 70/40, B29C 70/38

(54) **COMPOSITE TAPE APPLICATOR HEAD**
FASERVERBUND-BANDAPPLIKATORKOPF
TÊTE D'APPLICATION DE BANDES DE FIBRES COMPOSITE

(30) Priority: 15.04.2020 ES 202030303
(43) Date of publication of application: 22.02.2023
(60) Divisional application: 24201645.9 / 4 467 327
(73) Proprietor: M. Torres Diseños Industriales, S.A.U., 31119 Torres De Elorz (Navarra) (ES)
(72) Inventor: TORRES MARTINEZ, Manuel, deceased (ES)
(74) Representative: Evens, Paul Jonathan
(86) International application number: PCT/ES2021/070241
(87) International publication number: WO 2021/209663

(56) References cited:
- ES-A1- 2 186 458
- US-A1- 2010 276 087
- US-A1- 2011 088 527
- US-A1- 2012 036 977

## Description

### Technical field

The present invention relates to the industry dedicated to the application of composite tapes whereby laminated pieces that are used in the aeronautical, naval, etc. industries are formed, and more specifically with the tape applicator head that applies said composite tapes.

### State of the art

At present, heads for applying composite tapes used for the application by means of compact superposition of layers of composite material to form laminated parts that are mainly used in the aerospace industry are known. The demand for lighter and more energy efficient aircraft has resulted in the gradual and direct substitution of metallic components with composite materials, which also allow the development of integral designs.

Therefore, it is necessary to have heads for applying composite tapes that reduce production times while at the same time maintaining the quality of the final product. Heads of this type comprise compacting means acting on the composite tape to be applied, pressing on same to fix it on the surface for the deposition thereof, to establish compaction, and preventing the formation of bubbles that render the part that contains them unusable.

Spanish Patent ES 2186458 B1, belonging to the same applicant of the present invention, refers to heads of this type. This head comprises cutting means to establish the beginning of the tape to be applied on the surface for the deposition thereof and to cut the end of the applied tape while the head advances. However, when straight cuts are to be made, the head must stop to make the cut of the composite tape or otherwise there will be surpluses at the limits of the surface for deposition. Deposition times of composite tapes are thereby increased with the corresponding increase in production costs, or alternatively an additional cutting process is necessary to remove the surpluses together with the consequent additional cost of material and also of time in post-processing.

Another drawback of this solution is that it is necessary for the head to leave the area to be taped in order to discard the waste fibre parts that should not remain in the piece. This is unproductive time in which the fibre is not deposited, increasing production times.

For the application process, this head furthermore comprises compaction means consisting of a hold-down element and a pressure element, which act independently in a successive manner on the surface for deposition. Both elements can be tilted between their respective working and retraction positions so that the hold-down element first acts by applying the tape on the surface for the deposition thereof by pressing on it, and subsequently a pressure element acts by forcefully compressing the applied tape.

The drawback of this compaction mechanism is that the hold-down element holds down the composite fibre together with the fibre support paper against the surface for deposition and therefore cuts the tension of the paper, as a result of the winding of the paper and guiding of the paper, when the fibre loses tension, hinders the application of the composite tape and the collection of the paper, and this may also lead to a deposition of defective fibre in a process stoppage due to maintenance needs of the tape applicator head.

US 2010/276087 A1 discloses the preamble of claim 1.

In view of the described drawbacks or limitations that currently existing solutions present, there is a need for a solution that allows composite tapes to be applied in such a way that a fast and reliable application occurs without machine stops or additional cutting processes, improving head dynamics.

### Object of the invention

In order to meet this objective and solve the technical problems discussed so far, in addition to providing additional advantages that can be derived later, the present invention provides an applicator head for the application of a composite tape preferably fed from a supply reel to a surface for the deposition thereof, in accordance with claim 1. In a preferred solution of the invention, the tape is formed by a layer of composite material disposed on a supporting layer. The applicator head comprising cutting means for cutting the fed layer of composite material to be applied to the surface for the deposition thereof, the layer of composite material being cut while it is applied on the surface for the deposition thereof.

The cutting means for cutting the applicator head for the application of a composite tape comprises a first blade longitudinally displaceable in a first direction of displacement being configured to cut the layer of composite material, and a second blade to cut the layer of composite material displaceable in a second direction of displacement, such that the first direction of displacement of the first blade is at an angle with regard to the second direction of displacement of the second blade.

As a result of this configuration, when the layer of composite material is to be cut for its application, in the case in which the surface for deposition requires a straight cut of the layer of composite material, it is not necessary to stop the applicator head since with one of the two blades, as a result of its direction of displacement, it allows cutting while the application head advances. This configuration not only allows straight cuts (perpendicular to the direction of movement of the fibre) but also allows a high degree of different configurations in cutting the tape with the head in motion, which can be efficient and have a higher process speed even in complex geometries on the surface for deposition. The productivity of the machine that performs a continuous application of the layer of composite material without stopping the head is thereby improved, allowing it to be cut in motion regardless of the direction of the cut.

Preferably, one of the directions of displacement of the blades is perpendicular to the feed direction of the composite tape, so that cuts of the layer of composite material can be made at an angle with same, and with the other blade at an angle with regard to the previous one, straight cuts can be made without stopping the tape application process. Thus, the cutting means comprises guiding means on which a blade-holding mechanism comprising the cutting blade is displaced longitudinally, in the direction of displacement. Said guiding means may be in the form of, for example, a spindle, a linear actuator, a rack-and-pinion mechanism, etc.

The disclosure also relates to an applicator head comprising compaction means for compacting the fed layer of composite material to be applied on the surface for the deposition thereof.

The head comprises compaction means comprising a compaction roller configured to apply pressure on the layer of composite material applied to the surface for the deposition thereof. Said compaction means further comprise an application separator configured to separate a layer of composite material from the supporting layer by a cut edge of the layer of composite material by applying separation pressure on the tape on the side of the supporting layer, so that the cut edge of the separated layer of composite material points towards a contact area between the compaction roller and the surface for deposition at a certain height of the application separator from the surface for deposition.

As a result of this configuration, the layer of composite material to be applied is separated and undercutting takes place without holding the supporting layer against the surface for deposition. In this way, the tension of the supporting layer is not lost as occurs in some embodiments of the state of the art. The compaction means improves the dynamics of the applicator head, simplifying the handling of the supporting layer and preventing the possible creation of air bubbles when applying the layer of composite material on the surface for the deposition thereof due to the loss of tension of the supporting layer. The application of pressure for the compaction of the layer of composite material on the surface for the deposition thereof is directly exerted by the compaction roller, which receives the cut edge of the layer of composite material in the contact area of said roller with the surface for the deposition thereof, thus improving compaction and preventing the creation of bubbles.

Preferably, the application separator is configured to separate the layer of composite material such that the separated layer of composite material contacts the compaction roller before said layer of composite material contacts the surface for the deposition thereof. The compaction roller thereby begins to receive the layer of composite material before the application so that the application is more fluid and the formation of wrinkles and bubbles is prevented.

Another feature of the disclosure is that the application separator is displaceable to apply separation pressure, so that it is possible to advance material by choosing which part of the composite strip to undercut.

Preferably, the application separator is pivotable so that it goes towards the contact area to apply separation pressure. Thus, the separation of the layer of composite material is performed as close as possible to the contact area between the compaction roller and the surface for the deposition thereof, ensuring the correct compaction of the layer of composite material on the surface for the deposition thereof.

To contribute to this approximation of the application separator to the contact area between the compaction roller and the surface for deposition, it is planned that the application separator is preferably intended to have its end in the form of a wedge, and the separation of the layer of composite material from the supporting layer is also more effective.

The disclosure also relates to an applicator head comprising collection means for collecting the fed layer of composite material not used on the surface for the deposition thereof.

According to another aspect, the disclosure provides an applicator head with collection means for collecting the fed layer of composite material not used on the surface for the deposition thereof. Said collection means comprises a collection separator configured to separate the unused cut layer of composite material from the supporting layer by a cut edge of the layer of composite material. This is achieved by applying a separation pressure on the tape on the side of the supporting layer. The collection means also comprises a collection container which collects the separated part of the layer of composite material.

As a result of this configuration, surpluses of the fed layer of composite material generated during cutting and that should not be applied on the surface for deposition are separated. This prevents, in the stockpiling reel-holder where the supporting layer is wound, said surplus from being stored and the reel from being able to be used with the supporting layer for reuse or recycling. An additional process is thus eliminated by preventing the machine comprising the applicator head from coming out of the mould. Consequently, production times are reduced, saving on costs and material.

Preferably, the separator of the collection means is displaceable to apply separation pressure on the tape at the precise moment, selecting the separation only of the surplus of the unused layer of composite material.

For better dynamics and separation of the surpluses of the unused layer of composite material, the collection means are preferably intended to comprise at least two positioning rollers on which the tape circulates to the stockpiling reel-holder, with the actuator being interposed between both positioning rollers. The application of the separation pressure of the tape is thereby favoured, directing the surplus towards the collection container.

Additionally, the collection separator preferably comprises a protrusion to apply separation pressure on the tape, so as to facilitate the separation of the unused layer of composite material.

The disclosure also contemplates an applicator head comprising cutting means and/or compaction means and/or collection means.

### Description of the figures

Figure 1 shows a schematic perspective view of an applicator head for applying composite tapes (1) with cutting means (30), compaction means (40) and collection means (50).
Figure 2 shows a perspective view of the cutting means (30).
Figure 3 shows a top view of the cutting means (30) in which only the first blade (31) is seen; however, the second blade (32) is also indicated, since it would be at the same height.
Figure 4 shows a front view of the cutting means (30), where the direction of displacement of the blades (31, 32) on the spindles (33, 34) and the direction of displacement (9) of the tape (2) are indicated with arrows.
Figure 5 shows a schematic front view of the compaction means (40) with the application separator (41) in a higher retracted position in which it does not act on the tape (2).
Figure 6 shows a schematic front view of the compaction means (40) with the application separator (41) in a working position in which it acts against the tape (2).
Figure 7 shows a schematic front view of the compaction means (40) with the application separator (41) in an upper retracted position with the layer of composite material (2.1) being applied on the surface for the deposition thereof and separated from the supporting layer (2.2).
Figure 8 shows a detailed view of the collection means (50) with the collection separator (52) in the standby position above the tape (2).
Figure 9 shows a detailed view of the collection means (50) with the collection separator (52) in an actuation position in which it acts against the tape (2) releasing the unused layer of composite material (2.1) waste.
Figure 10 shows a detailed view of the collection means (50) with the collection separator (52) in the standby position with the supporting layer (2.2) going to a reel-holder and the surplus layer of composite material (2.1) going to the collection container (53).

### Detailed description of the invention

In light of the aforementioned figures, and in accordance with the adopted numbering, one may observe therein a preferred exemplary embodiment of the invention, which comprises the parts and elements indicated and described in detail below.

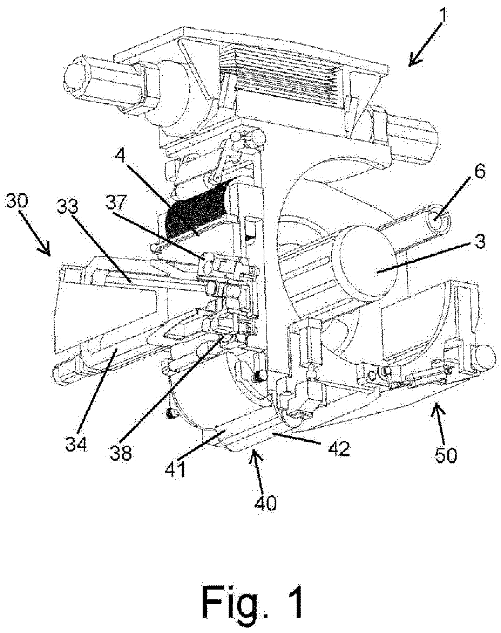

Figure 1 shows an applicator head (1) for the application of tapes (2) of the type used for the application by means of the compact superposition of layers of composite material (2.2) to form laminated parts that are mainly used in the aerospace industry. The applicator head (1) of a preferred embodiment shown in Figure 1 comprises cutting means (30), compaction means (40) and collection means (50).

A mould is provided in which there is defined a surface for deposition on which the layers of composite material (2.2) will be applied. In a first step, a supply reel with a tape (2) made up of a layer of composite material (2.1) on a supporting layer (2.2) is disposed on a supply reel-holder (3), with the layer of composite material (2.1) having a greater rigidity than the supporting layer (2.2).

Next, the tape (2) is circulated through a guide (4). At the moment that the tape (2) reaches cutting means (30), knowing the shape of the surface for deposition where the layer of composite material (2.1) is going to be deposited, a cut is made to the tape (2). Said cut is made with a blade (31, 32) with such precision that it allows the cutting of the layer of composite material (2.1) to be applied without the cutting of the supporting layer (2.2).

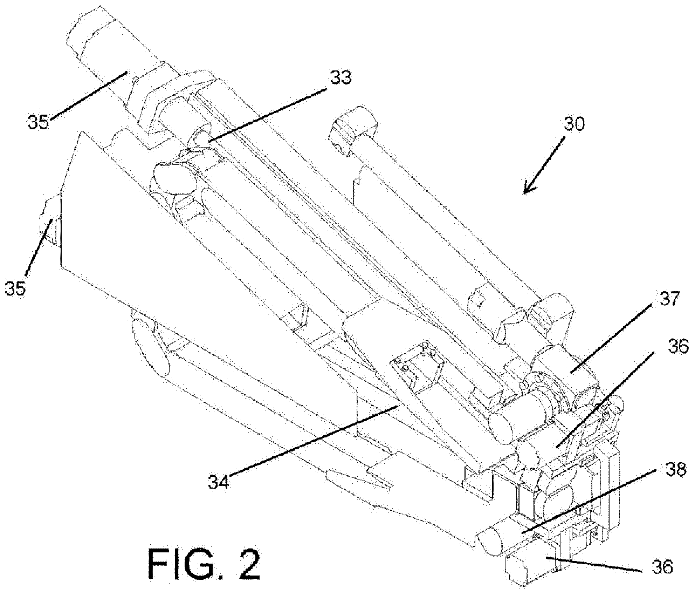

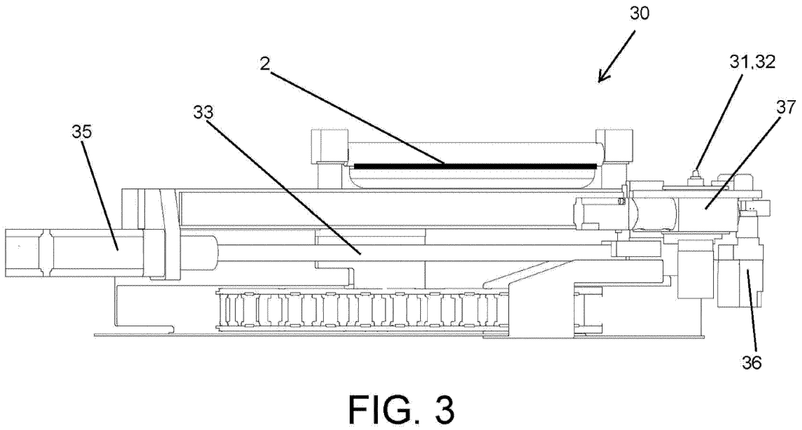

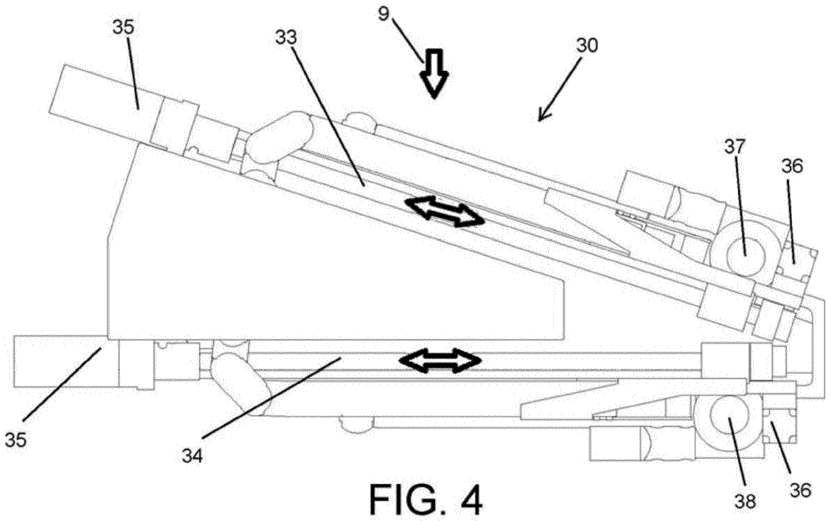

To proceed with said cutting, the cutting means (30) comprises a first blade (31) and a second blade (32). As can be seen in Figure 3, the first blade (31) is comprised in a first blade holder (37) which, as seen in Figures 2 and 4, is displaced longitudinally in a first direction on guiding means, the guiding means in this particular case being a first spindle (33), so that said first spindle (33) is at an angle with regard to the perpendicular to a feed direction of the composite tape (2). In the preferred embodiment illustrated in Figure 1, the feed direction is vertical, advancing along the guide (4), so that the first spindle (33) is at an angle with regard to the horizontal defining a displacement of the blade (31) at an angle.

As can be seen in Figures 2 and 4, said cutting means (30) also comprises the second blade (32) comprised in a second blade holder (38) that is displaced longitudinally in a second direction of displacement on a second spindle (34) so that said second spindle (34) is in a horizontal position defining a horizontal displacement of the second blade (32).

In this way an actuator cylinder (36) transversely displaces the blade holder (37, 38) until the blade (31, 32) contacts the tape (2) and at that moment an actuator (35) causes the displacement of the blade holder (37, 38) along the spindle (33, 34) so that the blade (31, 32) produces a first cut on the tape (2). A blade or another device is used, as needed according to the shape of the mould of the part to be generated and generating for that purpose a cut edge of the layer of composite material (2.1) to be applied.

Next, the cut tape (2) goes to compaction means (40) for the application of the layer of composite material (2.1) on the surface for the deposition thereof.

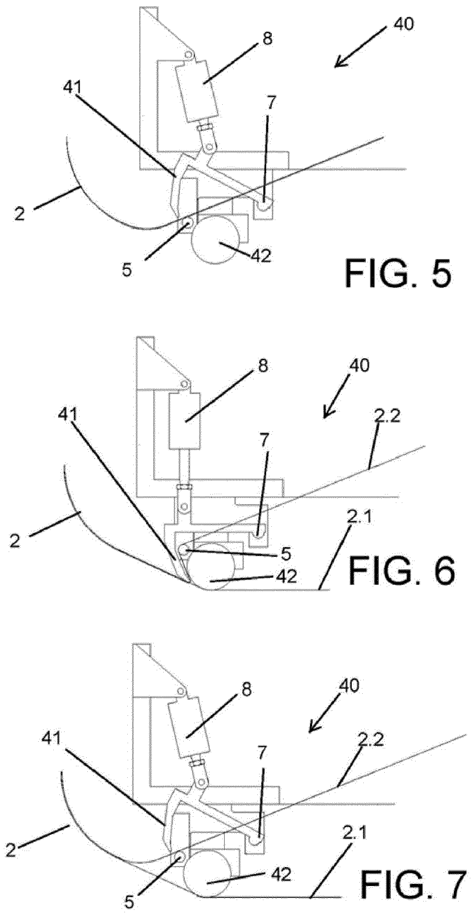

Figures 5, 6 and 7 show the sequence carried out by the compaction means (40) for the application of the layer of composite material (2.1) on the surface for the deposition thereof.

At first, an application separator (41) is in the retracted position, advancing the tape (2) with the layer of composite material (2.1) and the supporting layer (2.2) without being applied, as can be seen in Figure 5. As the applicator head (1) approaches the surface for the deposition thereof, the application separator (41) applies separation pressure on the tape (2). The movement of said application separator (41) is selected so that it separates the layer of composite material (2.1) by the previously generated cut edge. Thus, the application separator (41) pivots with regard to an articulation (7) by the action of a pneumatic actuator (8). Upon being pivotally displaced, it comes as close as possible to a contact area between a compaction roller (42) and the surface for deposition. To favour the separation between the layer of composite material (2.1) to be applied and the supporting layer (2.2), the application separator (41) is wedge-shaped.

As can be seen in figure 6, with the compaction roller (42) already in contact with the surface for deposition due to the movement of the applicator head (1), the application spreader (41) applies pressure to the tape (2 ) in a working position in which the wedge-shaped end of the application separator (41) is located between the compaction roller (42) and the surface for deposition. A separation pressure is then applied on the tape (2) without acting on surface for deposition, that is, at a height of the application separator (41) from the surface for deposition such that the tension of the supporting layer (2.2) in the applicator head (1) is not lost. When acting on the tape (2) and given that the layer of composite material (2.1) has a greater rigidity than the supporting layer (2.2), when the separation pressure is applied, the tensioned tape (2) deforms upon reaching a detachment angle with the help of support on a guide roller (5). The separation of the layer of composite material (2.1) from the paper supporting layer (2.2) is thereby achieved.

With this configuration, the application separator (41) directs the layer of composite material with its cut edge towards the contact area between the compaction roller (42) so that the separated layer of composite material (2.1) contacts the compaction roller (42) before said layer of composite material (2.1) contacts the surface for the deposition thereof. Thus, the compaction roller (42) contacts the contacting layer of composite material (2.1) between the compaction roller (42) and the surface for the deposition thereof, depositing the layer of composite material (2.1) on the surface for the deposition thereof and applying a compaction force. The formation of bubbles that cause the final part to present defects and lose properties or be discarded is thereby prevented.

As can be seen in figure 7, the layer of composite material (2.1) has already been separated from the supporting layer (2.2), and the layer of composite material (2.1) is being applied on the surface for the deposition thereof, being compacted by the compaction roller. (42); at this time, the application separator (41) returns to its retracted position.

The application of the layer of composite material (2.1) continues with the advance of the applicator head (1) until reaching the edge where the mould ends, where the layer of composite material (2.1) is applied. For this purpose, moments before reaching the end of the application of the layer of composite material (2.1), the cutting means (30) cuts the layer of composite material (2.1) so that the direction of the cut coincides with the shape of the mould or surface for deposition.

For this purpose, if it is necessary to make a cut of the tape (2) at an angle, the advance of the head (1) is synchronised with the displacement of the second blade (32) so that the edge of the cut layer of composite material (2.1) coincides with the shape of the edge of the mould without it being necessary to stop the advance of the head (1). However, this is not possible when the cut to be made is horizontal and not at an angle. To do this, if the second blade (32) were to be used, it would be necessary to stop the head (1) and make the cut by displacing the second blade ( 32), which increases manufacturing times.

In order to solve this problem, the advance movement of the head (1) is synchronised with the displacement of the first blade (31), so that a straight cut is achieved without having to stop the advance of the head (1) when the displacement of the first blade (31) is at an angle. It furthermore allows the cut to be made for the next application, and for the advance of the head (1) not to stop.

Once the layer of composite material (2.1) has been deposited on the surface for the deposition thereof, the tape (2) goes to a stockpiling reel-holder (6). Sometimes surpluses of layer of composite material (2.1) are generated between one cut and the next of the tape (2), and said surplus remains on the tape (2) that goes to the stockpiling reel-holder (6). These surpluses are commonly removed manually once the reel is removed from the stockpiling reel-holder (6), and other times they are deposited on a table outside the application area. This requires an additional process and the consequent increase in manufacturing times.

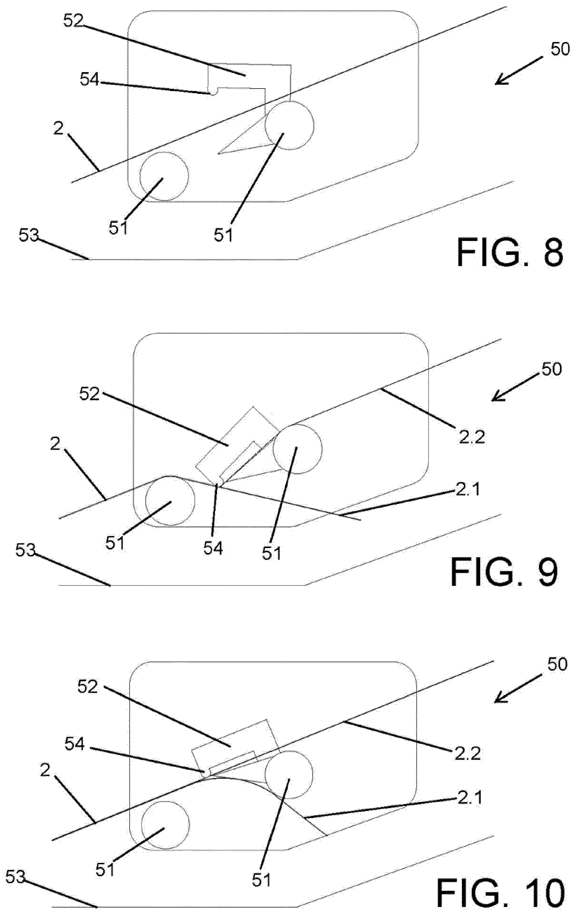

According to a preferred feature of the invention, the head (1) comprises collection means (50) for collecting the fed layer of composite material (2.1) not used on the surface for the deposition thereof. The sequence of separating surpluses of layer of composite material (2.1) from the supporting layer (2.2) can be seen in Figures 8, 9 and 10.

At first, a collection separator (52) configured to separate the unused cut layer of composite material (2.1) from the supporting layer (2.2), is placed in an upper standby position above the tape (2), as can be seen in Figure 8.

It can be seen in Figure 9 how the collection separator (52) acts on a cut edge of the layer of composite material (2.1) by applying a separation pressure on the tape (2) on the side of the supporting layer (2.2) by the action of a pneumatic actuator. Said collection separator (52) is located between two positioning rollers (51) so that the tape (2) forms a certain angle that allows the separation of the layer of composite material (2.1) as it is more rigid than the supporting layer (2.2) that follows its path to the stockpiling reel-holder (6). The collection separator (52) is thereby displaced to the working position in which it applies pressure on the tape (2), preferably with a protrusion (54), achieving the separation of the layer of composite material (2.1).

It can be seen in Figure 10 how the collection separator (52) has returned to its standby position in which it does not apply pressure on the tape (2) and the layer of composite material (2.1) is separated, going to a collection container (53) to collect the surplus layer of composite material (2.1).

A reel comprising only a supporting layer is thereby collected on the stockpiling reel-holder (6) for later use or recycling.

The deposition of a first layer of composite material (2.1) is thus completed, leaving the head (1) ready for the application of the next layer of composite material (2.1) on the surface for the deposition thereof.

## Claims

1. An applicator head (1) for the application of a composite tape (2) fed from a supply reel (3) to a surface for the deposition thereof; the tape (2) being formed by a layer of composite material (2.1) disposed on a supporting layer (2.2); comprising cutting means (30) for cutting the fed layer of composite material (2.1) to be applied on the surface for the deposition thereof; the cutting means (30) comprising a first blade (31) longitudinally displaceable in a first direction of displacement being configured to cut the layer of composite material (2.1) **characterized by** a second blade (32) to cut the layer of composite material displaceable in a second direction of displacement, wherein the first direction of displacement of the first blade (31) is at an angle with regard to the second direction of displacement of the second blade (32).

2. The applicator head (1) according to claim 1, wherein the direction of displacement of the first blade (31) or the second blade (32) is perpendicular to a feed direction of the composite tape (2).

3. The applicator head (1) according to claim 1 or 2, wherein the cutting means (30) comprise guiding means (33, 34) for the displacement of the blade (31, 32) longitudinally in the direction of displacement.

## Patentansprüche

1. Applikatorkopf (1) zum Auftragen eines Faserverbundbandes (2), das von einer Ablaufspule (3) zugeführt wird, auf eine Oberfläche zum Ablegen desselben; wobei das Band (2) durch eine Schicht aus Faserverbundmaterial (2.1) gebildet ist, die auf einer Trägerschicht (2.2) angeordnet ist; umfassend ein Schneidmittel (30) zum Schneiden der zugeführten Schicht aus Faserverbundmaterial (2.1), die auf die Oberfläche aufgetragen werden soll, zum Ablegen derselben; wobei das Schneidmittel (30) eine erste Klinge (31) umfasst, die in einer ersten Verschiebungsrichtung längsverschiebbar ist und dazu konfiguriert ist, die Schicht aus Faserverbundmaterial (2.1) zu schneiden, **gekennzeichnet durch** eine zweite Klinge (32) zum Schneiden der Schicht aus Faserverbundmaterial, die in einer zweiten Verschiebungsrichtung verschiebbar ist, wobei die erste Verschiebungsrichtung der ersten Klinge (31) in einem Winkel in Bezug auf die zweite Verschiebungsrichtung der zweiten Klinge (32) verläuft.

2. Applikatorkopf (1) nach Anspruch 1, wobei die Verschiebungsrichtung der ersten Klinge (31) oder der zweiten Klinge (32) senkrecht zu einer Zufuhrrichtung des Faserverbundbands (2) ist.

3. Applikatorkopf (1) nach Anspruch 1 oder 2, wobei das Schneidmittel (30) Führungsmittel (33, 34) zur Verschiebung der Klinge (31, 32) in Längsrichtung in der Verschiebungsrichtung umfasst.

## Revendications

1. Tête d'application (1) pour l'application d'une bande composite (2) alimentée à partir d'une bobine d'approvisionnement (3) vers une surface pour le dépôt de celle-ci ; la bande (2) étant formée par une couche de matériau composite (2.1) disposée sur une couche de support (2.2) ; comprenant des moyens de coupe (30) destinés à couper la couche alimentée de matériau composite (2.1) à appliquer sur la surface pour le dépôt de celle-ci ; les moyens de coupe (30) comprenant une première lame (31) déplaçable longitudinalement dans une première direction de déplacement étant configurée pour couper la couche de matériau composite (2.1), **caractérisée par** une seconde lame (32) pour couper la couche de matériau composite déplaçable dans une seconde direction de déplacement, dans laquelle la première direction de déplacement de la première lame (31) est en angle par rapport à la seconde direction de déplacement de la seconde lame (32).

2. Tête d'application (1) selon la revendication 1, dans laquelle la direction de déplacement de la première lame (31) ou de la seconde lame (32) est perpendiculaire à une direction d'alimentation de la bande composite (2).

3. Tête d'application (1) selon la revendication 1 ou 2, dans lequel les moyens de coupe (30) comprennent des moyens de guidage (33, 34) destinés au déplacement de la lame (31, 32) longitudinalement dans la direction de déplacement.
